(19) Europäisches Patentamt
European Patent Office
Office européen des brevets

(11) Publication number: **0 122 771**
**B1**

(12) **EUROPEAN PATENT SPECIFICATION**

(45) Date of publication of patent specification: **01.03.89**

(51) Int. Cl.$^4$: **G 02 C 7/04,** D 06 P 1/28, C 08 J 3/20

(21) Application number: **84302443.1**

(22) Date of filing: **10.04.84**

(54) **Tinted hydrogel plastic articles and method of tinting them.**

(30) Priority: **11.04.83 US 483784**

(43) Date of publication of application:
**24.10.84 Bulletin 84/43**

(45) Publication of the grant of the patent:
**01.03.89 Bulletin 89/09**

(84) Designated Contracting States:
**AT BE CH DE FR GB IT LI NL SE**

(56) References cited:
**AT-B- 101 301**
**AT-B- 244 629**
**AT-B- 245 286**
**CH-A- 437 203**
**DE-B- 539 468**
**GB-A-1 547 525**
**US-A-4 252 421**

(73) Proprietor: **Softint Inc.**
**6020 Six Forks Road**
**Raleigh North Carolina 27609 (US)**

(72) Inventor: **daCosta, Nicholas M.**
**99 Leafields**
**Houghton Regis, Bedfordshire LU5 5LU (GB)**
Inventor: **Press, Miles W.**
**6901 Aspen Court**
**Raleigh, N.C. 27609 (US)**
Inventor: **Touch, Alan J.**
**MoRiches Road Box 62**
**Smithtown New York 11787 (US)**

(74) Representative: **Collier, Jeremy Austin Grey et al**
**J.A.Kemp & Co. 14, South Square Gray's Inn**
**London WC1R 5EU (GB)**

**EP 0 122 771 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention concerns a process for producing a hydrogel soft contact lens as claimed in Claim 1.

While contact lenses are often tinted as a handling aid and sometimes tinted to protect the user from bright light, they also may be tinted for cosmetic purposes, not only to enhance the natural coloring of the eyes, but sometimes to conceal disfigurements.

Hard contact lenses are generally tinted by adding dyes to the materials from which the lenses are formed. This creates a tremendous inventory problem in order to encompass a useful range of hues and intensities.

Although it is believed that soft contact lenses have not been tinted on a commercial basis prior to the present invention, efforts at doing so have been underway for a considerable period of time. The method of U.S. Patent No. 3,476,499 (Wichterle) involves the application to opposite faces of a soft contact lens of two different aqueous solutions which diffuse into pores of the lens and upon contacting each other form an insoluble precipitate that tints the lens. In one example, while a contact lens was floated concave side up on the surface of an aqueous 5% potassium ferricyanide solution, a drop of an aqueous 5% ferrous sulfate solution was applied to the center of the concave lens face. After several hours, the central part of the lens was colored a deep blue shade.

In U.S. Patent No. 3,679,504 (Wichterle), a soft contact lens is made by cementing hydrogel layers around a colored pattern such as a pattern simulating the iris.

U.S. Patent No. 4,157,892 (Tanaka *et al.*) also concerns tinting of a water-absorbable plastic or hydrogel soft contact lens and reports four known methods and the disadvantages of each method. In the process of the patent, the water-absorbable plastic is combined with an azo coupler, formed into a soft contact lens, and then a diazonium salt is caused to permeate into pores of the lens, after which the lens is immersed in a water-compatible dispersion which is optimum for the coupling reaction to produce an azoic dye that tints the lens. The utility of this process is clouded by accumulating evidence of toxic effects of azo dyes, their metabolic products, or uncoupled reactants.

British Patent Specification No. 1,547,525 (Meshel *et al.*) also employs a diazonium salt for the tinting of soft contact lenses. Unlike the process of the Tanaka patent, the azo coupler need not be employed until the diazonium salt has been absorbed by the lens. This permits the absorbed diazonium salt to be decomposed in selected areas by exposure to actinic light, thus leaving those areas untinted. This is considered to be necessary because the size of a soft contact lens typically exceeds the size of the iris, and the tinted portion of the lens should cover only the iris.

Austrian Patent No. 244629 relates to producing colour and similar effects in hydrogel contact lenses in which precipitates are formed in the hydrogels, generally using light-sensitive chemicals and silver halides. There is no indication however that the final tinted product could withstand repeated autoclaving without leaching out of the colour.

Austrian Patent No. 245286 also relates to a method of tinting soft hydrogel contact lenses, in which it is disclosed that it is possible to use textile fibre dyes. The dyes in the contact lenses are said to be fast at temperatures up to 40°C, but no indication is given that the dyes would remain so at temperatures up to 100°C necessary to sterilise contact lenses.

The present invention provides a process for producing hydrogel soft contact lenses, which have one or more of the following advantages.

1. The colorant is resistant to leaching out on storage and autoclaving.

2. The colorant is resistant to decomposition in the presence of the reagents used in daily cleaning and sterilization of lenses, although it is preferred not to use strong oxidizing agents.

3. The lens parameters do not substantially change on tinting.

4. The colorant substantially does not fade upon prolonged exposure to light.

5. The colorant is non-toxic and physiologically inert in concentrations employed in the tinting of the hydrogel soft contact lenses.

6. The surfaces of the hydrogen soft contact lenses are free from colorant which otherwise might get into the eye.

These attributes have been verified by exhaustive testing which has resulted in an approval by the U.S. Food and Drug Administration. That testing showed among other things the capability of reproducing the hue and intensity of the colorant in novel hydrogel soft contact lenses.

The hydrogel soft contact lenses, like those of the British patent discussed above, are tinted by water-insoluble dye particles. However, the present invention provides a process for producing a hydrogel soft contact lens having a pupillary area, an iris area surrounding and contiguous with said pupillary area, and a scleral area surrounding and contiguous with said iris area. This lens comprises at least in said iris area a water-insoluble vat dye physically locked into said hydrogel lens, which vat dye is substantially impervious to repeated autoclaving and is not individually discernible to the naked eye, substantially none of said vat dye protruding beyond the surface of the lens, and said scleral area being clear and untinted. Preferred classes of vat dyes are anthraquinone, anthrone, indigoid and thioindigoid.

In a process that assures the formation of aggregates of the vat dye, which may be visible under an electron microscope, while keeping the surface free, a hydrogel soft contact lens is tinted by a process which comprises dispersing a solubilized leuco sulfate ester of at least one vat dye to provide a water-compatible dispersion including an aqueous solution of said solubilized leuco sulfate ester, heating said dispersion to a temperature within the range of 30°C to 85°C and maintaining said dispersion within said temperature range, impregnating said hydrogel soft contact lens with said dispersion at least within said iris area, while maintaining said dispersion within said temperature range and maintaining said scleral area and, optionally, said pupillary area clear and untinted; and precipitating substantially all of said sulfate ester by oxydation to provide in the lens water-insoluble vat dye substantially all of which is distributed in a subsurface region of the lens and is physically locked within said hydrogen lens, which vat dye is substantially impervious to autoclaving. Warming is needed to ensure that all of the leuco sulfate ester is dispersed and that the particles of the dispersion are sufficiently fine.

A portion of the leuco sulfate ester might otherwise remain on the surface of the hydrogel plastic article and could form an insoluble deposit that would be resistant to the rinsing that perferably follows each of steps (1) and (2).

The water-compatible dye dispersions can be applied in the practice of this invention to prehydrated, partially hydrated, or fully hydrated hydrogel plastic articles. When applied to a hydrated soft contact lens, it usually is sufficient to allow the water-insoluble aggregates to be formed beneath the convex face to only about 10% of the total thickness of the lens.

In order for the water-compatible dye dispersion to impregnate a hydrogel plastic article, it may be necessary to use a swelling agent such as a polar organic liquid, preferably a protic solvent such as methanol or another alcohol, a glycol, or glycerol. Acetone is also useful. Hydrogel soft contact lenses currently on the market have water contents within the approximate range of 28% to 79% by weight, and no swelling agent may be necessary at water contents of about 70% or above. Because lower water contents usually indicate smaller pore sizes, a swelling agent may be necessary when the water content is substantially below 70%. Other hydrogel plastic articles which may be tinted according to the invention may have water contents as low as about 10% or as high as about 95%.

A preferred practice involves producing the water-compatible dispersion with the aid of ultrasonic vibrations to aid dissolution, and in some cases it is preferable to heat the dispersion to maximize dissolution of the dye. Depending on the physical characteristics of the solubilized leuco sulfate ester used, many minutes of ultrasonic treatment may be used, but usually four or five minutes will suffice. The elevated temperature used may range from 35°C to 85°C, and is preferably from 40°C to 60°C, but optimum conditions are established for each individual solubilized leuco sulfate ester. Following ultrasonic treatment, and the heating, the water-compatible dispersion may be filtered to eliminate any oversize particles.

Before the tinted hydrogel plastic article is put to its ultimate use, it may be placed in an ultrasonic cleaning bath to remove loosely adhered dye particles. It can then be scrutinized by quality control procedure and may be sealed into an appropriate vial and autoclaved at e.g. 120°C for 50 minutes. Autoclaving fulfills the dual purpose of sterilizing the product and aiding aggregation of the dye in the hydrogel matrix.

It is believed that the precipitation step involves two stages; first, an acid-catalyzed hydrolysis of the sulfate ester to produce the corresponding leuco or reduced form of the vat dye. This hydrolysis does take place but proceeds more slowly in the absence of acid. In the second stage, the reduced leuco form is oxidized to its vat dye which could be accomplished simply by exposure to air and accelerated by ultraviolet radiation. Preferably this two-stage process is carried out through the use of an acidic oxidizing medium, which may be e.g. a solution of nitrous acid oxidizing agent in an acidic catalyst such as acetic acid or sulfuric acid.

The acidic catalyst may be used in a broad range of concentrations of from 0.1—30% by weight, but more usually 1—5%. The concentration of the oxidizing agent in the water-compatible dye dispersion is preferably from 0.1—20% by weight, but more commonly from 0.5—5%. Generally the acidic catalyst and the oxidizing agent are contained in the same solution and are applied in suitable concentrations and at appropriate temperatures to the rinsed areas of the hydrogel plastic article which have previously been permeated by dye precursors.

If the oxidizing agent is sodium nitrite, as is preferred, it may be included in the water-compatible dispersion of the dye precursor rather than with the acidic catalyst. This procedure offers the advantages that the developing solution cannot then evolve toxic nitrous fumes on storage, and also that there is much less danger of over-oxidizing the vat dye. Certain vat dyes are prone to over-oxidation which will lighten or otherwise alter the colors, and steps may be taken to prevent that occurrence. In addition to putting the nitrile salt into the dye precursor dispersion, a moderating chemical can additionally be incorporated to lessen the likelihood of over-oxidation of the developed vat dye. The moderating chemical may be e.g. hydroquinone, gallic acid, 4-aminophenol or thiourea or other chemicals of similar oxidation-reduction potential, and it is usually added to achieve a concentration of from 0.1—5% by weight.

The hue imparted by the tinting may be conveniently intensified in one or more ways. A possible method is to increase the proportion of the leuco ester which preferably is from 0.01% to 10% by weight of the impregnating water-compatible dispersion. A second method is either to add or increase the concentration of swelling agent. A third method is to increase the time of exposure to the solution. Usually an exposure of 15 seconds to 2 minutes is preferred, and to avoid longer times, it would generally be preferable to increase the concentration of the leuco ester and/or the swelling agent.

The time of exposure of the hydrogel to the impregnating water-compatible dispersion may be controlled by rinsing the dispersion from the hydrogel with distilled water. Drops of distilled water adhering to the hydrogel surface can cause pale spots of reduced dye concentration by extracting solubilized leuco sulfate ester from the hydrogel. In extreme cases this can cause rejection of a significant percentage of dyed objects during quality control inspection. The problem can be removed by following the distilled water rinse immediately by a detergent rinse so that any residual water film is uniform and minimal. A detergent rinsing solution which has been found satisfactory is the Barnes-Hind cleaning solution for soft contact lenses, but other solutions are possible.

When precipitating the vat dye with the developing solution, the endpoint of the process is apparent because precipitation results in a distinct color change. To facilitate recognition of the endpoint, a standard dyed object is generally placed in proximity for comparison.

A large variety of useful solubilized leuco sulfate esters have been devised and synthesized over the years. Many of them are commercially available and in sufficient colors so that mixtures of them are adequate to produce any desired range of hues. The following dyes have been found particularly useful in the practice of this invention, which is not in any way limited to this particular selection:

The solubilized Leuco Sulfate Esters of Dibromodibenzo(b,def)chrysene-7,14-dione
16,23-Dihydrodinaphtho(2,3-a:2',3'-i)naphth(2',3':6,7)indolo(2,3-c)carbazole-5,10,15,17,22,24-hexone
N,N'-(9,10-Dihydro-9,10-dioxo-1,5-anthacenediyl)-bisbenzamide
6,6'-Diethoxy-Δ-2,2'-(3H,3'H)bibenzo(b)thiophene-3,3'-dione
7,16-Dichloro-6,15-dihydro-5,9,14,18-anthazine-tetrone
16,17-Dimethoxydinaphtho(1,2,3-cd:3',2',1'-1m)-perylene-5,10-dione

It is generally accepted that the molecular structures of these solubilized vat dyes are exemplified by the diagrammatic formulae of the type shown below for solubilized Δ-2,2'(3H,3'H)bisindole-3,3'-dione:

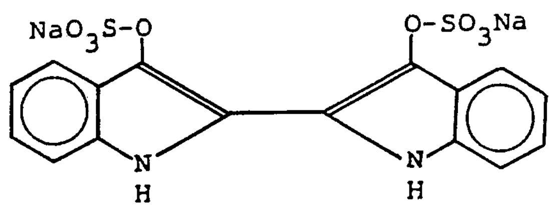

and solubilized 6,15-dihydro-5,9,14,18-anthrazinetetrone:

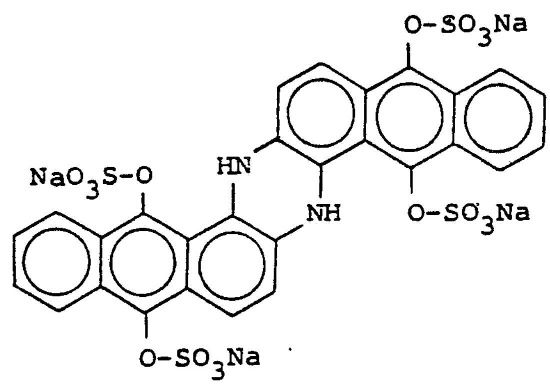

and that the multiplicity of very hydrophilic sodium sulfato groups is responsible for solubility of these materials in aqueous media.

Solubilized leuco sulfate esters of vat dyes are sensitive to moisture, which will hydrolyze them. Once hydrolyzed, they are prone to air-oxidation, a process potentiated by light, especially that of shorter wavelengths. For those reasons, it is preferred to store the leuco esters in a safe environment, as in vacuum desiccators in absence of light.

Referring to the two dye precursors whose structural formulas were depicted in the previous paragraph, the hydrolyzed and oxidized Δ-2,2'(3H,3'H)bisindole-3,3'-dione has the structure:

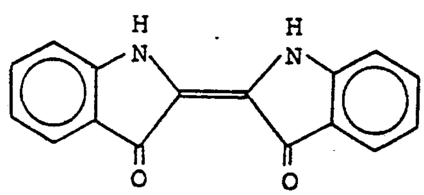

and the hydrolyzed and oxidized 6,15-dihydro-5,9,14,18-anthazinetetrone has the structure:

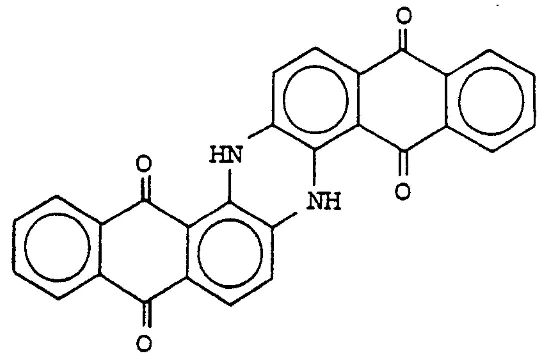

Vat dyes are used in very large quantities to impart color to clothing and other textile products because of the wide range of colors available, their excellent fastness to sunlight, permanence in washing processes, resistance to chlorine bleach, excellent affinity for water-absorbent polymers, and absence of any tendency to be cleaved to physiologically harmful amines. In their application to this invention, vat dyes have the advantage that they are insoluble and resistant to leaching from the matrix of the water-absorbent plastic in which they have been precipitated.

Uniformly tinted lenses are not always preferred because the portion covering the pupil of the eye introduces an unnatural coloration to the scene being viewed and renders dimly lit scenes even dimmer so that such lenses are not usually suited for driving a car at night. The method of tinting with vat dyes according to this invention is easily adaptable to masking devices which can reserve clear, untinted areas where desired, as in the center of the lens over the pupil and the extreme periphery of the lens where it extends over the white portion of the eye's surface. If the hydrogel plastic is swelled to enhance its impregnation, the swelling in the masked areas may be physically inhibited to minimize any flow of the water-compatible dye dispersion beneath the mask or masks. Soft contact lenses are so thin that a water-compatible dispersion of a dye precursor can eventually penetrate completely through a lens in unmasked areas while still leaving masked areas essentially untinted.

It will be apparent to those skilled in the art that mixtures of solubilized leuco esters of vat dyes can be utilized to produce exactly any desired hue and intensity after development in the water-absorbent plastic, and also that the dyed area can be transparent, translucent, semi-opaque, or opaque, as desired. Multicolored effects can be achieved by using differently colored dyes separately along with appropriate masking techniques to provide good resolution of the colours ih the selected areas. For example, the tinted area of a soft contact lens might be mottled, or it might include a visual indication of "right" or "left".

The following examples illustrate the invention. All parts and percentages are by weight unless otherwise specified.

### Example I

A hydrogel plastic disc composed of lightly crosslinked poly(2-hydroxyethyl methacrylate) having a water concentration of 38% by weight was tinted in the following way. 4.0 g of solubilized 16,17-dimethoxydinaphtho(1,2,3-cd:3′,2′,1′-1m)perylene-5,10-dione was thoroughly dispersed in 20 ml of a 30% solution of reagent grade methanol in distilled water. After warming to 50°C this water-compatible dye dispersion was applied to cover one surface of the hydrogel plastic disc for a time of 30 seconds, after which the excess was removed by rinsing with distilled water. To a solution of 2 ml of concentrated sulfuric acid in 50 ml of distilled water was added 0.5 g of sodium nitrite, and the resulting nitrous acid developing solution was applied to the plastic disc which had been treated with the dye precursor. After 1.5 minutes the plastic disc was thoroughly rinsed with distilled water. The disc was found to have acquired a light shade of aqua-green. A medium shade of aqua-green was produced by contacting one surface of an identical hydrogel plastic disc with the water-compatible dye precursor dispersion for 1.5 minutes, and a fairly dark shade resulted when the contact time was extended to 3.5 minutes. Thus, a full range of desirable shades of aqua-green could conveniently be obtained by varying the time during which the dye precursor was allowed to diffuse into the swollen hydrogel disc.

The color was stable to repeated washings with water, with saline solution, and with a detergent, and it was also stable to extended autoclaving (120°C for 50 minutes). Uniformity of tinting was established by examination with a Documentator having a magnification of 17.5.

### Example II

A dispersion of two different dye precursors was prepared in 20 ml of a 15% solution of pure methanol in distilled water by thoroughly mixing in 0.2 g of solubilised N,N′-(9,10-Dihydro-9,10-dioxo-1,5-anthracenediyl)bisbenzamide and 0.6 g of solubilised 16,17-Dimethoxydinaphtho)1,2,3-cd:3′,2′,1′-1m)perylene-5,10-dione. A hydrogel plastic strip of lightly crosslinked poly(2-hydroxyethyl methacrylate) film having a water concentration of 42% by weight was immersed in the dye precursor dispersion at 30°C

for 35 seconds. Two identical hydrogel plastic strips were immersed for 3.5 minutes and 5.25 minutes, respectively. After rinsing with distilled water the strips were placed in a developing solution of 2 ml of concentrated sulfuric acid in 50 ml of distilled water (representing approximately 7% sulfuric acid) and containing 0.4 g of sodium nitrite, for 1.5 minutes. When they had been rinsed with distilled water, the three strips of hydrogel plastic displayed a useful and pleasing range of green shades which were durable and stable. The hue was easily altered by changing the proportions of the two dye precursors.

Example III

2.0 g of solubilised 16,23-Dihydrodinaphtho(2,3-a:2′,3′-i)naphth(2′,3′:6,7)indolo(2,3-c)carbazole-5,10,15,17,22,24-hexone which had been stored in the dark in a vacuum desiccator was dispensed into 20 ml of a 50% solution of pure methanol in distilled water. The water-compatible dye precursor dispersion was heated to 50°C and applied to cover the unmasked portions of the convex face of a hydrogel soft contact lens composed of poly(2-hydroxyethyl methacylate) lightly crosslinked with ethylene dimethacrylate ("polymacon") having a water concentration of 38% by weight. The lens face had been physically masked so that the area of the lens which covers the pupil would be untinted as would the area around the periphery which extends over the white tissue of the eye. The water-compatible dispersion of dye precursor and included additives was allowed to contact this and two comparable hydrogel contact lenses for periods of 2.75 minutes, 6 minutes and 9 minutes, respectively. After the unmasked areas of the lenses had been rinsed with distilled water, they were contacted with a developing solution of 2% sulfuric acid and 1% sodium nitrite in distilled water for 1.5 minutes. There resulted three contact lenses which were tinted brown over the iris areas only, with excellent sharpness of line, in three very different intensities, all of which were suitable for cosmetic purposes while not restricting light in the pupil areas. The tints of the lenses were stable to water, saline solution, cleansing solutions and autoclaving. In leaching experiments with saline solution, it could not be determined that any color leached out.

Microtome sections were made of the lens which the water-compatible dispersion had contacted for six minutes. By inspection of photomicrographs, it was apparent that the vat dye was concentrated beneath the convex surface within about 5% of the total thickness of the lens, although the limit of its penetration was asymptotic. There was a sharp line of demarcation between the masked and unmasked areas.

Example IV

2.0 g of the solubilised vat dye of Example III was dispersed in 20 ml of a 50% solution of pure methanol in distilled water, and then there were added 0.5 g of sodium nitrite, 0.1 g of sodium hydrosulfite and 0.25 g of thiourea.

The water-compatible dispersion of solubilized vat dye and auxiliary chemicals was subjected to ultrasonic vibration for 4 minutes to aid dispersion then heated to 50°C for at least 5 minutes to promote dissolution of as much dye as possible. The heated solution was filtered through a 5-micrometer filter and then through a 1-micrometer filter. The filtered dispersion was maintained at 50°C during the time that it was used to tint contact lenses as in Example III. After they had been tinted for the prescribed times, the lenses were quickly rinsed with distilled water, immediately rinsed again with Barnes-Hind cleaner for soft lenses, and then immediately treated with a developing solution of 2% sulfuric acid in distilled water.

The lenses were subjected to ultrasonic cleaning, inspected and finally autoclaved at 120°C for 50 minutes. The modifications utilized in this example produced uniform coloration of contact lenses, free from any light spots of low dye concentration and also devoid of dark discontinuities at the surface.

Example V

The solubilized vat dye of Example III was employed in the tinting of a soft contact lens which was a hydrogel copolymer of poly(methyl methacrylate)-*co*-(vinylpyrrolidinone)-*co*-(allyl methacrylate) which is also called "lidofilcon B". This hydrogel plastic device comprised 79% by weight of water, so that the methanol was omitted from the water-compatible dispersion, which contained only 0.2 g of the dye in 20 ml of water. In all other respects the procedure of Example III was followed to produce three tinted lenses having the same qualities as there reported.

Other hydrogel plastic materials which have been used successfully in the invention include tefilcon, phemfilcon, hefilcon A, hefilcon B, perfilcon A, lidofilcon B, tetrafilcon A, droxifilcon A, ocufilcon B, bufilcon A, crofilcon A, deltafilcon A, and etafilcon A. As well as hydrophilic polymers of 2-hydroxyethyl methacrylate, 2 hydroxypropyl acrylate, glycerol methacrylate, glycidyl methacrylate, dimethylaminoethyl methacrylate, acrylic acid, methacrylic acid, collagen (natural or hybrid), acrylamide, diacetone acrylamide, and co-polymers of these hydrophilic monomers with other hydrophobic monomers having water contents of 10% to 90%.

## Claims

1. A process for producing a hydrogel soft contact lens having a pupillary area, an iris area surrounding and contiguous with said pupillary area, and a scleral area surrounding and contiguous with said iris area, which process comprises dispersing a solubilized leuco sulfate ester of at least one vat dye to provide a water-compatible dispersion including an aqueous solution of said solubilized leuco sulfate ester,

heating said dispersion to a temperature within the range of 30°C to 85°C and maintaining said dispersion within said temperature range,

treating said hydrogel soft contact lens with a swelling agent to enlarge the pores of the hydrogel,

impregnating said hydrogel soft contact lens with said dispersion at least within said iris area, while maintaining said dispersion within said temperature range and maintaining said scleral area and, optionally, said pupillary area, clear and untinted,

rinsing the impregnated hydrogel soft contact lens,

precipitating substantially all of said sulfate ester by oxidation to provide in the lens water-insoluble vat dye substantially all of which is distributed in a subsurface region of the lens and is physically locked within said hydrogel lens, which vat dye is substantially imprevious to autoclaving, and

rinsing the hydrogel soft contact lens after the sulfate ester has been precipitated.

2. A process according to claim 1 wherein the oxidation is effected with an acidic oxidizing medium.

3. A process according to claim 1 or 2 wherein the water-compatible dispersion is applied only to the convex face of the soft contact lens.

4. A process according to claim 3 in which the vat dye aggregates are concentrated beneath the convex face within about 10% of the total thickness of the lens.

5. A process according to claims 1 to 4 wherein areas of the face of the lens are individually masked and water-compatible dispersions of differently coloured dyes are separately applied to different unmasked areas.

**Patentansprüche**

1. Verfahren zur Herstellung einer hydrogelen weichen Kontaktlinse mit einem Pupillenabschnitt, einem Irisabschnitt, der den Pupillenabschnitt umgibt und zu ihm benachbart ist, und einem Lederhautabschnitt, der den Irisabschnitt umgibt und zu ihm benachbart ist,
wobei das Verfahren enthält:

— Dispergieren eines solubilisierten Leukosulfatesters von wenigstens einem Küpenfarbstoff, so daß eine wasserkompatible Dispersion mit einer wässrigen Lösung des solubilisierten Leukosulfatesters erhalten wird,

— Erwärmen der Dispersion auf eine Temperatur innerhalb des Bereiches von 30°C bis 85°C und Halten dieser Dispersion innerhalb des Temperaturbereiches,

— Behandeln der hydrogelen weichen Kontaktlinse mit einem Quellmittel, um die Poren des Hydrogels zu erweitern,

— Imprägnieren der hydrogelen weichen Kontaktlinse mit der Dispersion wenigstens innerhalb des Irisabschnittes während die Dispersion innerhalb des Temperaturbereiches und des Lederhautabschnittes und, gegebenen- falls, der Pupillenabschnitt transparent und ungefärbt gehalten wird,

— Abspülen der imprägnierten, hydrogelen weichen Kontaktlinse,

— vollständiges Präzipitieren des Sulfatesters durch Oxydation, so daß in der Linse wasserunlöslicher Küpenfarbstoff erhalten wird, der im wesentlichen vollständig in einem Bereich einer Schicht unter der Oberfläche der Linse verteilt und innerhalb der hydrogelen Linse körperlich gebunden ist, wobei der Küpenfarbstoff im wesentlichen für Autoklaven-Behandlung undurchlässig ist, und Abspülen der hydrogelen weichen Kontaktlinse nachdem der Sulfatester präzipitiert ist.

2. Verfahren gemäß Anspruch 1, bei dem die Oxydation mit einem acidischen Oxydationsmittel durchgeführt wird.

3. Verfahren gemäß dem Anspruch 1 oder 2, bei dem die wasserkompatible Dispersion nur auf der konvexen Seite der weichen Kontaktlinse angewendet wird.

4. Verfahren gemäß Anspruch 3, bei dem die Küpenfarbstoff-Aggregate unterhalb der konvexen Seite innerhalb etwa 10% der totalen Dicke der Linse angereichert werden.

5. Verfahren gemäß den Ansprüchen 1 bis 4, bei dem die Abschnitte auf der Außenseite der Linse individuell maskiert werden und wasserkompatible Dispersionen verschiedener Farbstoff getrennt auf verschiedene unmaskierte Abschnitte angewendet werden.

**Revendications**

1. Un procédé pour produire une lentille de contact molle en hydrogel ayant une région de pupille, une région d'iris entourant la région de pupille et contiguë avec celle-ci et une région de sclérotique entourant la région d'iris et contiguë avec celle-ci, procédé qui consiste à disperser un ester sulfurique de leuco solubilisé d'au moins un colorant de cuve de manière à obtenir une dispersion compatible avec l'eau contenant une solution aqueuse de cet ester sulfurique de leuco solubilisé,

à chauffer cette dispersion à une température dans l'intervalle de 30 à 85°C et à maintenir cette dispersion dans cet intervalle de tempèratures,

à traiter la lentille de contact molle en hydrogel par un agent gonflant qui agrandit les pores de l'hydrogel,

à imprégner ladite lentille de contact molle en hydrogel par ladite dispersion au moins dans la région d'iris, tout en maintenant la dispersion dans l'intervalle de températures indiqué, et en conservant la région de sclérotique et, si on le désire, la région de pupille, transparente et non colorée,

à rincer la lentille de contact molle en hydrogel imprégnée,

à précipiter pratiquement tout l'ester sulfurique par oxydation de manière à former dans la lantille en colorant de cuve insoluble dans l'eau qui est presque totalement réparti dans une région subsuperficielle de la lentille et fixé physiquement dans ladite lentille d'hydrogel, ce colorant de cuve étant pratiquement insensible au passage à l'autoclave, et

à rincer la lentille de contact molle en hydrogel après précipitation de l'ester sulfurique.

2. Un procédé selon la revendication 1, dans lequel l'oxydation est réalisée à l'aide d'un milieu oxydant acide.

3. Un procédé selon la revendication 1 ou 2, dans lequel la dispersion compatible avec l'eau est appliquée uniquement sur la face convexe de la lentille de contact molle.

4. Un procédé selon la revendication 3, dans lequel les agrégats de colorants de cuve sont concentrés au-dessous de la face convexe sur environ 10% de l'épaisseur totale de la lantille.

5. Un procédé selon la revendication 1 à 4, dans lequel des régions de la face de la lentille sont masquées individuellement et des dispersions compatibles avec l'eau de colorants de nuances différentes sont appliquées séparément aux diverses régions non masquées.